Europäisches Patentamt

European Patent Office

Office européen des brevets

(11) Publication number: **0 271 342 B1**

# EUROPEAN PATENT SPECIFICATION

(45) Date of publication of patent specification: **19.08.92**

(51) Int. Cl.5: **G11B 11/10**, G11B 13/04, G02F 1/00

(21) Application number: **87310884.9**

(22) Date of filing: **10.12.87**

(54) **Magnet rotation control apparatus for magneto-optical recording.**

(30) Priority: **11.12.86 JP 293443/86**
**18.03.87 JP 61279/87**

(43) Date of publication of application:
**15.06.88 Bulletin 88/24**

(45) Publication of the grant of the patent:
**19.08.92 Bulletin 92/34**

(84) Designated Contracting States:
**AT DE FR GB IT NL**

(56) References cited:
**EP-A- 0 126 596**
**EP-A- 0 127 243**
**DE-A- 3 510 620**

(73) Proprietor: **SONY CORPORATION**
**7-35 Kitashinagawa 6-chome Shinagawa-ku**
**Tokyo 141(JP)**

(72) Inventor: **Eguchi, Naoya**
**Patents Div. Sony Corp. 6-7-35**
**Kitashinagawa**
**Shinagawa-ku Tokyo 141(JP)**
Inventor: **Kawakubo, Osamu**
**Patents Div. Sony Corp. 6-7-35**
**Kitashinagawa**
**Shinagawa-ku Tokyo 141(JP)**
Inventor: **Okada, Hitoshi**
**Patents Div. Sony Corp. 6-7-35**
**Kitashinagawa**
**Shinagawa-ku Tokyo 141(JP)**
Inventor: **Maeda, Tamotsu**
**Patents Div. Sony Corp. 6-7-35**
**Kitashinagawa**
**Shinagawa-ku Tokyo 141(JP)**
Inventor: **Tosaka, Susumu**
**Patents Div. Sony Corp. 6-7-35**
**Kitashinagawa**
**Shinagawa-ku Tokyo 141(JP)**

(74) Representative: **Pilch, Adam John Michael et al**
**D. YOUNG & CO. 10 Staple Inn**
**London WC1V 7RD(GB)**

## Description

This invention relates to magnet rotation control apparatus for magneto-optical recording, such as may be used in apparatus for applying a magnetic field to an optical disc when information is being recorded on the optical disc.

One type of optical disc has a recording layer formed on its recording face. This recording layer is generally a magnetic thin film made of a material such as GdCo, FeTe, GdTbFe or the like. There has already been proposed an apparatus by which information can be recorded on the recording layer of the optical disc by irradiating the disc with a laser beam and applying a megnetic field to the recording layer, so that magnetisation formed in the recording layer in a direction perpendicular thereto is inverted by the Kerr effect.

Since such an optical recording disc is capable of recording data by means of a laser beam spot of several micro-metres, and information can be recorded therein at a very high recording density, it may be used as an external storage apparatus for a computer or the like. When data is recorded on or erased from the optical recording disc, a magnetic field of a particular polarity must be applied to the recording layer of the disc.

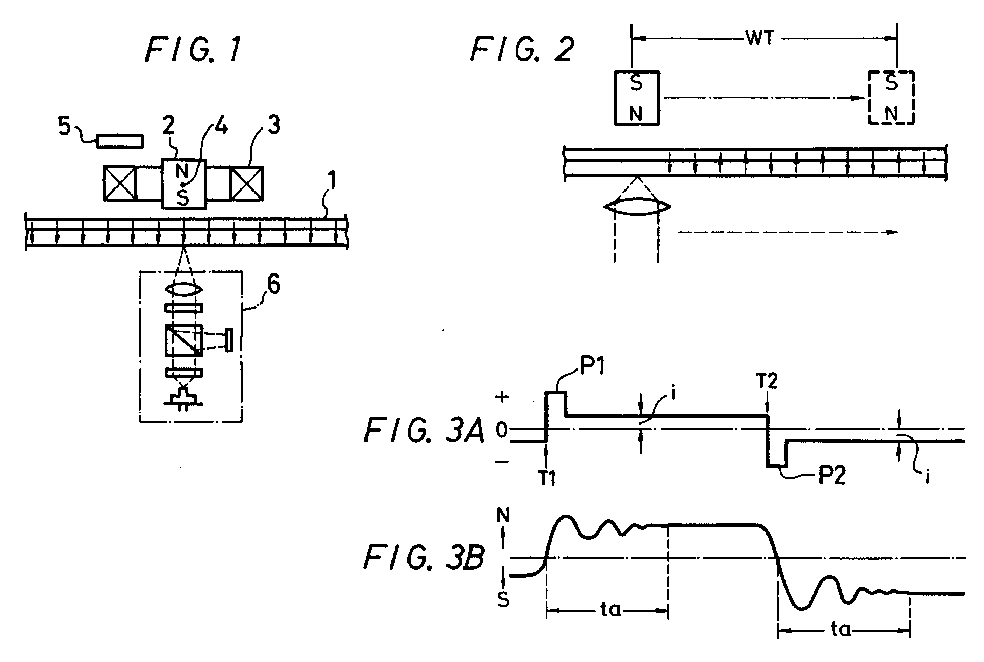

Figure 1 of the accompanying drawings is a schematic representation of apparatus used to apply a magnetic field to an optical recording disc.

Referring to Figure 1, there is shown an optical disc 1 having formed thereon a recording layer which can exhibit the so-called magneto-optical effect. A permanent magnet 2 (hereinafter simply referred to as a magnet) is provided to apply a magnetic field to the optical disc 1. A coil 3 is arranged to surround the magnet 2 with the magnet at its centre. When a current is supplied to the coil 3 in a particular direction, the magnet 2 rotates around a supporting shaft 4 to align either its N (north) pole or S (south) pole towards the surface of the optical disc 1. A magnet member 5 is located at a position displaced from a central axis of the magnet 2. When the coil 3 is supplied with a current that inverts the polarity of the magnet 2, the magnet 2 is at first attracted by the magnetic member 5 and starts to rotate in the anti-clockwise direction. The magnet 2 is then rotated by 180° thereby reversing its N and S poles. An optical head 6 is provided to irradiate the recording surface of the optical disc 1 with a laser beam.

When information is recorded by such recording apparatus on the optical disc 1 (so-called orientation disc) in which its recording layer is magnetised in the same direction as shown by arrows in Figure 1, the power of the laser beam must be intensified and, at the same time, the coil 2 must be supplied with a current which is opposite in direction thereby to rotate the magnet 2 by 180°, thus inverting the magnetic field applied to the surface of the optical disc 1. Then, if the optical disc 1 is rotated while the laser beam is being modulated by data to be recorded, the magnetisation in the recording layer on the portion irradiated by the laser beam is inverted, for example as represented by arrows in Figure 2 of the accompanying drawings, thus making it possible to record the data in the recording layer during a time duration WT.

As described above, the previously-proposed optical disc recording apparatus employs the coil 3 to invert the magnet 2 in polarity upon recording (or erasing) the data. In order to record or erase data more rapidly, the magnet 2 must be inverted in polarity stably and quickly. Thus, the coil 3 must be supplied with a larger inverting current.

When the optical disc recording apparatus is set in the recording mode, the coil 3 is supplied with a large start or kick signal P1 at a time T1 as shown in Figure 3A of the accompanying drawings. Thereafter, the coil 3 is supplied with a lower holding current i that keeps the magnet 2 in its inverted state. At the completion of the recording, at a time T2, a kick signal P2 (of opposite polarity to the signal p1) is supplied to the coil 3 and then the coil 3 is supplied with a holding current i that keeps the magnet 2 in its initial state. Although the direction of the magnetic field to the surface of the optical disc 1 is then inverted from the N pole to the S pole as shown in Figure 3B of the accompanying drawings, the magnet 2 is repreatedly accelerated and decelerated at the completion of the inversion due to the existence of the magnetic member 5 and the attracting force caused by the holding current i supplied to the coil 3, so that until the magnet 2 has settled at a predetermined position, a relatively long settling time ta is required.

As a result, it takes a long time for the optical disc recording apparatus to be set in the recording mode for the optical disc 1. Thus, when the optical disc 1 is employed as external storage apparatus for a computer or the like, the operation time is long.

European Patent Application EP-A-0 222 916 (derived from PCT WO 86/06534) discloses a magnet rotation control arrangement similar to that described above with reference to Figure 1, except that a short-circuit winding or coil is provided laterally offset from the central axis of the main coil. However, the problem of the long settling time for the magnet is still present in the disclosed arrangement.

According to the present invention there is provided magnet rotation control apparatus for magneto-optical recording, the apparatus comprising:

magnet means arranged for rotation between predetermined stop positions near the surface of an optical recording disc;

first coil means surrounding said magnet means with the magnet means in the centre thereof, and for generating a magnetic field perpendicular to the surface of said optical recording disc;

second coil means located at a position displaced from the central axis of said first coil means in the circumferential direction of said optical recording disc; and

means for supplying to said first coil means a first drive current which inverts the polarity of said magnet means;

characterised by:

means for supplying to said second coil means a second drive current which acts to initiate rotation of said magnet means;

means for stopping the supply of said second drive current before said magnet means stops its rotation;

sensor means for detecting a rotational displacement of said magnet means with regard to the stop positions; and

means for supplying a signal from said sensor means to said second coil means when supply of said second drive current has been stopped thereby to reduce the time necessary for said magnet means to settle at a stop position.

A preferred embodiment of the invention, to be described in greater detail hereinafter, provides an improved rotation control for a coil used for magneto-optical recording, in which a polarity inverting magnet can settle in a predetermined position in a relatively short time period.

The invention will now be described by way of example with reference to the accompanying drawings, throughout which like parts are referred to by like references, and in which:

Figure 1 is a schematic representation of a previously-proposed apparatus used to apply a magnetic field to an optical disc;

Figure 2 is a schematic representation of part of the apparatus shown in Figure 1 used to explain the recording operation on the optical disc;

Figures 3A and 3B are respective waveform diagrams of an inverting drive signal and a magnetic field applied to the optical disc in the apparatus of Figure 1;

Figure 4 is a partially-exploded perspective view of a rotation control apparatus for a coil used for magneto-optical recording;

Figure 5 is a cross-sectional view taken along a line X-X in Figure 4;

Figure 6 is a waveform diagram showing currents used in the apparatus of Figures 4 and 5;

Figures 7A to 7E are schematic representations of steps in the inversion of a magnet used in the apparatus of Figures 4 and 5;

Figure 8 is a block diagram showing a drive control circuit used in the rotation control for a coil in magneto-optical recording, according to an embodiment of the present invention;

Figure 9 is a waveform diagram of signals appearing at portions of the circuit of Figure 8; and

Figure 10 is a diagram of another embodiment of the present invention, illustrating the position at which a sensor is provided.

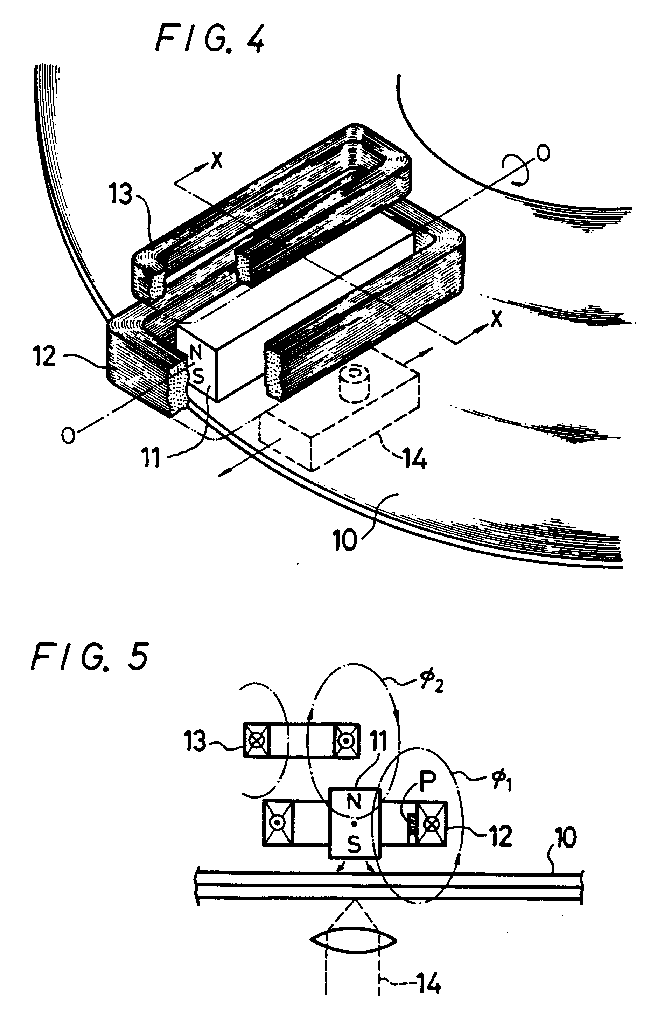

Figure 4 illustrates a rotation control apparatus for a coil used for magneto-optical recording.

Referring to Figure 4, there is shown an optical disc 10, referred to as a recording type optical disc. A permanent magnet 11 is provided which is made of a ferromagnetic material or the like and has strong residual magnetism. The permanent magnet 11 is rotatably supported about an axis O-O parallel to and above the surface of the optical disc 10, by a support shaft (not shown). A first coil 12 is provided to drive the magnet 11 so as to oppose its S pole or N pole to the surface of the optical disc 10. Also, the first coil 12 keeps the magnet 11 in that position. To this end, the first coil 12 is located so as to surround the magnet 11, with the magnet in the centre, and so as to generate a magnetic field in a direction perpendicular to the surface of the optical disc 10 when supplied with a current.

A second coil 13 is located above the first coil 12 at a position displaced from the centre of the first coil 12 in the circumferential direction of the optical disc 10.

An optical pickup 14 is provided as represented by dashed lines in Figure 4, and the optical pickup 14 irradiates the optical disc 10 with a laser beam from underneath, as in the previously-proposed apparatus.

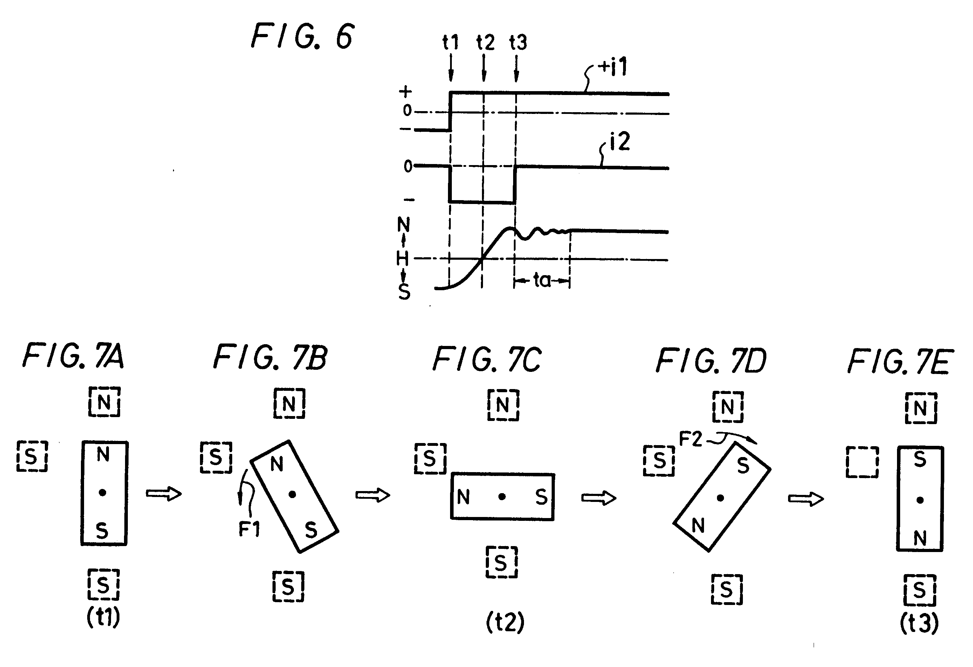

Initially, the operation inverting the magnet 11 will be described with reference to Figures 5 to 7. Figure 5 is a cross-sectional view taken along a line X - X in Figure 4, Figure 6 is a waveform diagram showing waveforms of currents fed to the first and second coils 12 and 13, and Figures 7A to 7E are schematic representations illustrating various rotational positions of the magnet 11.

When the first coil 12 is supplied with a current i1 in the positive direction and the second coil 13 is supplied with a current i2 in the negative direction at a time t1 as shown in Figure 6, imaginary magnetic poles N and S are respectively formed by magnetic fluxes $\phi 1$ and $\phi 2$ generated from the coils 12 and 13 in the direction perpendicular to the surface of the optical disc 10, as shown in Figures 7A to 7E by broken line blocks. Thus, a drive force F1 shown in Figure 7B that rotates the magnet 11 in the anti-clockwise direction is applied to the magnet 11 during a period starting from the time t1 so that the magnetic field applied to the surface of the optical disc 10 by the magnet 11 at a time t2 is made substantially zero as shown in Figure 7C. While the magnet 11 further keeps rotating during a period from the time t2 to a time t3, as a result of the S pole of the magnet 11 and the magnetic field generated by the second coil 13, there is produced a repulsive force F2 shown in Figure 7D, whereby the magnet 11 is decelerated during this period.

Accordingly, the magnet 11 is accelerated during the first half of a 180° rotation period thereof and decelerated during the second half thereof. Thus when the current i2 supplied to the second coil 13 is made zero immediately before the time t3 at which the magnet 11 is rotated by 180° as shown in Figure 6, the magnet 11 settles rapidly and is maintained at that position by the positive current flowing through the first coil 12.

In this case, considering factors such as the current flowing through the first coil 12, the position of the second coil 13, the value of the current flowing through the second coil 13, and the inetial force of the magnet 11, it is possible to provide the shortest settling time ta by controlling the waveform of the current i2 supplied to the second coil 13.

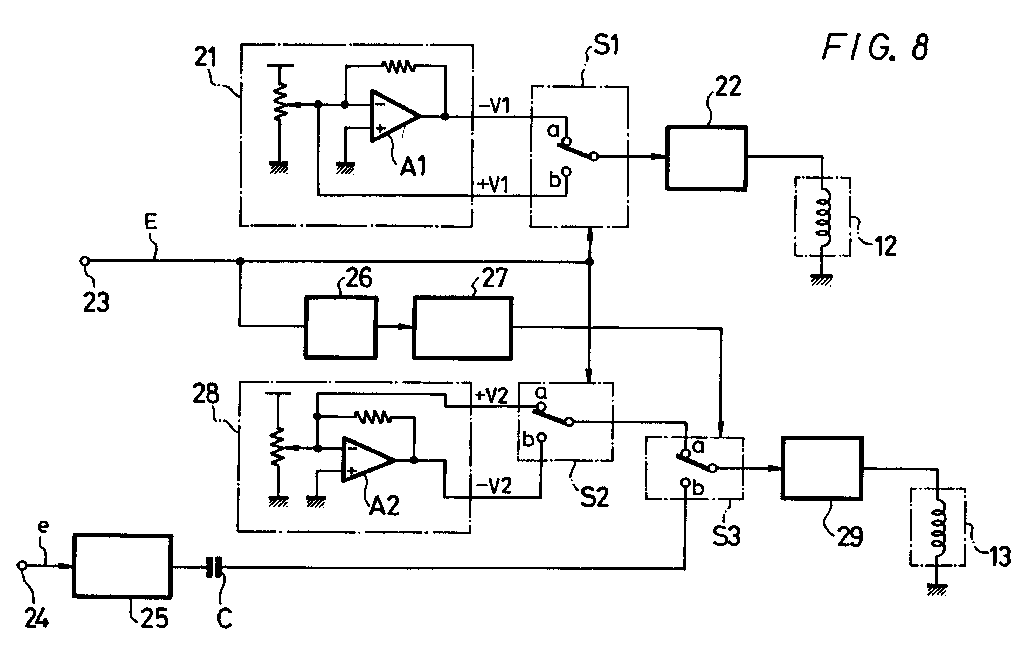

Figure 8 is a block diagram showing a control circuit according to an embodiment of the present invention, that controls the drive currents supplied to the first and second coils 12 and 13.

Referring to Figure 8, there is provided a power supply source 21 that supplies a current to the first coil 12. The power supply source 21 includes an inverting amplifier A1 which produces voltages +V1 and -V1, one of which is then selected by a switch S1 at one of its fixed contacts a or b.

The switch S1 is operated by a control signal E which indicates a recording or erase mode and is applied to an input terminal 23. Thus, when the optical disc recording apparatus is, for example, in the recording mode, the switch S1 is connected to the fixed contact b to permit the voltage +V1 to be supplied through an output amplifier 22 to the first coil 12 which is then supplied with a current +i1. A switch S2 is also operated by the control signal E.

When, on the other hand, the optical disc recording apparatus is in the erase mode, the switch S1 is connected to the fixed contact a and permits the voltage -V1 to be supplied through the output amplifier 22 to the first coil 12 which is then supplied with a current -i1.

A signal e that detects the rotation position of the magnet 11 is applied to a terminal 24. The signal e is supplied through a phase compensating circuit 25 and a capacitor C to a switch S3 which will be described later. This position detecting signal e is provided by a sensor, for example, a Hall element (shown as reference P in Figure 5) mounted on the inner peripheral surface of the first coil 12.

An edge detector 26 is provided to detect the leading edge and the trailing edge of the control signal E. The output from the edge dectector 26 is supplied to a pulse generator 27 which then produces a pulse signal at a predetermined time after the arrival of the edge detected by the edge detector 26. In response to the pulse signal from the pulse generator 27, the switch S3 is connected to its fixed contact a or b to select the signal to be supplied to the second coil 13.

The switch S3 receives at its fixed contact a a voltage +V2 or -V2 that is to be supplied to the second coil 13, and at its fixed contact b the magnet position detecting signal e.

A buffer amplifier 28 generating the voltages ±V2 is provided, which includes an inverting amplifier A2 producing the voltage -V2 of opposite polarity to the voltage +V2. An output amplifier 29 is connected between the switch S3 and the second coil 13.

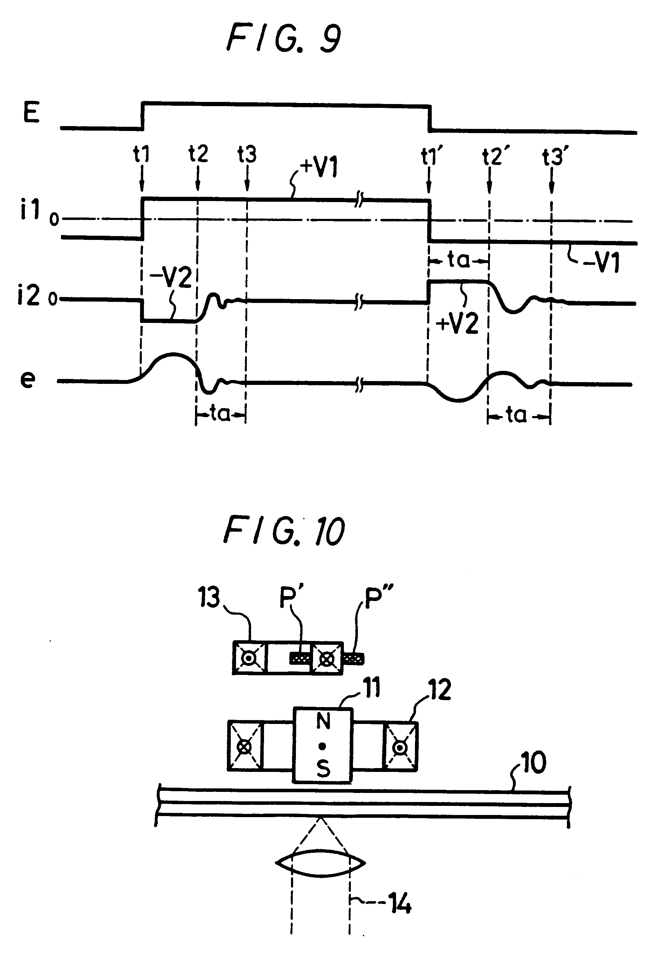

According to this control circuit, when the optical disc recording apparatus is set in the recording mode at the time t1 as represented by a waveform in Figure 9, the switch S1 is connected to the fixed contact b to permit the voltage +V1 to be supplied through the output amplifier 22 to the first coil 12 so that the current +i1 flows through the first coil 12. Also, at this time, the switch S2 is connected to its fixed contact b to permit the voltage -V2 to be supplied through the fixed contact a of the switch and the output amplifier 29 to the second coil 13 so that the current -i2 flows through the second coil 13.

As a result of this, the magnet 11 begins to rotate. At the time t2 before the magnet 11 completes its polarity inverting operation, the switch S3 is changed in position in response to the output pulse signal from the pulse generator 27. Thus, the switch S3 permits the A.C. component of the magnet position detection signal e to be supplied through its fixed contact b and the output amplifier 29 to the second coil 13.

Accordingly, as represented by the waveform in Figure 9, a position servo loop is formed from the time t2, whereby the magnet 11 rapidly settles to the inverted position at the time t3.

When the optical disc recording apparatus is set in the erase mode at a time t1', the switches S1 and S2 are both connected to the illustrated positions in Figure 8 so that the first coil 12 is supplied with the current -i1 and the second coil 13 is supplied with the current +i2, thus again rotating the magnet 11 by 180°. Also in this case, at a time t2', the switch S3 is connected to its fixed contact b to permit the magnet rotation position detection signal e to be supplied to the second coil 13.

Therefore, the position servo loop is formed before the completion of the inversion of the magnet 11 or from the time t2', so that the settling time ta of the magnet 11, can be reduced.

Figure 10 illustrates another embodiment of the present invention. In Figure 10, like parts corresponding to those of Figure 5 are marked with the same references and therefore need not be described in detail.

According to this embodiment, as shown in Figure 10, sensors P' and P'', such as Hall elements which detect the displacement of the magnet 11, are located symmetrically relative to the central line of the magnet 11 and are also mounted on the inside and the outside of the second coil 13. The two Hall element sensors P' and P'' are arranged to produce a differential output that provides the position detection signal e.

Therefore in this embodiment, the two sensors P' and P'' are equally affected by the magnetic field formed by the second coil 13 and magnetic fields generated from an external linear motor, two-axis mechanism and the like, and therefore the outputs thereof cancel each other out, thus producing no overall output. The two sensors P' and P'', however, respond with high sensitivity to the change in the magnetic field brought about by the rotation of the magnet 11 provided just below the two sensors P' and P''. As a result, the two sensors P' and P'' can detect only the rotational position of the magnet 11. Thus, by supplying the magnet rotation position detection signal e to the magnet inversion control circuit shown in Figure 8, it is possible to more effectively provide the feedback operation that settles the magnet 11.

According to the embodiment shown in Figure 10, since the distance between the magnet 11 and the first coil 12 can be reduced, it is possible to more effectively maintain the position of the magnet 11.

## Claims

1. Magnet rotation control apparatus for magneto-optical recording, the apparatus comprising:
   magnet means (11) arranged for rotation between predetermined stop positions near the surface of an optical recording disc (10);
   first coil means (12) surrounding said magnet means (11) with the magnet means (11) in the centre thereof, and for generating a magnetic field perpendicular to the surface of said optical recording disc(10);
   second coil means (13) located at a position displaced from the central axis of said first coil means (12) in the circumferential direction of said optical recording disc (10); and
   means (21,S1,22) for supplying to said first coil means (12) a first drive current (i1) which inverts the polarity of said magnet means (11);
   characterised by:
   means (28,S2,S3,29) for supplying to said second coil means (13) a second drive current (i2) which acts to initiate rotation of said magnet means (11);
   means (26,27) for stopping the supply of said second drive current (i2) before said magnet means (11) stops its rotation;
   sensor means (P;P',P'') for detecting a rotational displacement of said magnet means (11) with regard to the stop positions; and
   means (25) for supplying a signal (e) from said sensor means (P;P',P'') to said second coil means (13) when supply of said second drive current (i2) has been stopped thereby to reduce the time necessary for said magnet means (11) to settle at a stop position.

2. Apparatus according to claim 1, wherein said sensor means comprises two sensors (P',P'') arranged to be equally influenced by a magnetic field from said second coil means (13) and to produce a differential output signal.

3. Apparatus according to claim 2, wherein said two sensors comprise two Hall elements (P',P'').

4. Apparatus according to claim 3, wherein said two Hall elements (P',P'') are respectively mounted on inner and outer surfaces of said second coil means(12).

5. Apparatus according to any one of the preceding claims, wherein said means for stopping the supply of said second drive current (i2) includes a timing circuit (26,27) for causing a switch (S3) to discontinue supply of said second drive current (i2) a predetermined time after commencement of supply of said second drive current (i2).

6. Apparatus according to claim 5, wherein said timing circuit comprises an edge detector (26) and a pulse generator (27).

## Patentansprüche

1. Gerät zur Steuerung der Drehung eines Magneten bei magnetooptischer Aufzeichnung, welches Gerät umfaßt:
   einen Magneten (11), der zur Drehung zwischen vorbestimmten Endstellungen nahe der Oberfläche einer optischen Aufzeichnungsplatte (10) angeordnet ist,
   eine erste Spule (12), die den Magneten (11) umgibt, wobei der Magnet (11) in deren Zentrum liegt, und zum Erzeugen eines Magnetfeldes senkrecht zu der Oberfläche der optischen Aufzeichnungsplatte (10) dient,

eine zweite Spule (13), die in einer Position angeordnet ist, welche von der zentralen Achse der ersten Spule (12) in der Umfangsrichtung der optischen Aufzeichnungsplatte (10) versetzt ist, und

Mittel (21, S1, 22) zum Zuführen eines ersten Treiberstroms (i1), der die Polarität des Magneten (11) umkehrt, zu der ersten Spule (12), **gekennzeichnet durch**

Mittel (28, S2, S3, 29) zum Zuführen eines zweiten Treiberstroms (i2), der dahingehend wirkt, daß er eine Drehung des Magneten (11) ingangsetzt, zu der zweiten Spule (13),

ein Mittel (26, 27) zum Beenden des Zuführens des zweiten Treiberstroms (i2), bevor der Magnet (11) seine Drehung stoppt, Sensoren (P; P', P'') zum Erfassen einer Drehungsversetzung des Magneten (11) in bezug auf die Endstellungen und

ein Mittel (25) zum Zuführen eines Signals (e) von den Sensoren (P; P', P'') zu der zweiten Spule (13), wenn das Zuführen des zweiten Treiberstroms (i2) beendet worden ist, um dadurch die Zeit zu verringern, welche der Magnet (11) benötigt, um in einer Endstellung in Ruhelage zu kommen.

2. Gerät nach Anspruch 1, bei dem die Sensoren zwei Sensoren (P', P'') umfassen, die so angeordnet sind, daß sie in gleichem Maße durch ein Magnetfeld von der zweiten Spule (13) beeinflußt werden und ein Differential-Ausgangssignal erzeugen.

3. Gerät nach Anspruch 2, bei dem die zwei Sensoren aus Hall-Elementen (P', P'') bestehen.

4. Gerät nach Anspruch 3, bei dem die zwei Hall-Elemente (P', P'') auf einer inneren und einer äußeren Oberfläche der zweiten Spule (12) montiert sind.

5. Gerät nach einem der vorhergehenden Ansprüche, bei dem das Mittel zum Beenden des Zuführens des zweiten Treiberstroms (i2) eine Zeitsteuerschaltung (26, 27) zum Veranlassen eines Schalters (S3) enthält, das Zuführen des zweiten Treiberstroms (i2) eine vorbestimmte Zeit nach dem Beginn des Zuführens des zweiten Treiberstroms (i2) zu unterbrechen.

6. Gerät nach Anspruch 5, bei dem die Zeitsteuerschaltung einen Flankendetektor (26) und einen Impulsgenerator (27) umfaßt.

## Revendications

1. Appareil de commande de rotation d'aimant pour enregistrement magnéto-optique, l'appareil comprenant :

un moyen d'aimant (11) agencé pour rotation entre des positions de butée prédéterminées, à proximité de la surface d'un disque d'enregistrement optique (10) ;

un premier moyen de bobine (12) entourant ledit moyen d'aimant (11), le moyen d'aimant (11) étant au centre de celle-ci, et pour produire un champ magnétique perpendiculaire à la surface dudit disque d'enregistrement optique (10) ;

un second moyen de bobine (13) situé dans une position décalée par rapport à l'axe central dudit premier moyen de bobine (12) dans la direction circonférentielle dudit disque d'enregistrement optique (10) ; et

un moyen (21, S1, 22) pour alimenter ledit premier moyen de bobine (12) avec un premier courant de pilotage (il) qui inverse la polarité dudit moyen d'aimant (11);

caractérisé par :

un moyen (28, S2, S3, 29) pour alimenter ledit second moyen de bobine (13) avec un second courant de pilotage (i2) qui agit pour amorcer la rotation dudit moyen d'aimant (11) ;

un moyen (26, 27) pour arrêter l'alimentation dudit second courant de pilotage (i2) avant que ledit moyen d'aimant n'arrête sa rotation ;

un moyen détecteur (P; P', P'') pour détecter un déplacement en rotation dudit moyen d'aimant (11) par rapport aux positions de butée ; et

un moyen (25) pour délivrer un signal (e) issu dudit moyen détecteur (P; P, P'') vers ledit second moyen de bobine (13) lorsque la fourniture dudit second courant de pilotage (i2) a été arrêtée, pour réduire par ce moyen le temps nécessaire pour ledit moyen d'aimant (11) pour se mettre en place dans une position de butée.

2. Appareil selon la revendication 1, dans lequel ledit moyen détecteur comprend deux détecteurs (P', P'') agencés de manière à être influencés de manière égale par un champ magnétique issu dudit second moyen de bobine (13) et pour produire un signal de sortie différentiel.

3. Appareil selon la revendication 2, dans lequel lesdits deux détecteurs sont constitués par deux éléments à effet Hall (P', P'').

4. Appareil selon la revendication 3, dans lequel lesdits deux éléments à effet Hall (P', P") sont montés, respectivement, sur les surfaces intérieure et extérieure dudit second moyen de bobine (12).

5. Appareil selon l'une quelconque des revendications précédentes, dans lequel ledit moyen pour arrêter la délivrance dudit second courant de pilotage (i2) comprend un circuit temporisateur (26, 27) pour faire qu'un commutateur (S3) interrompe la délivrance dudit second courant de pilotage (i2) au bout d'un temps prédéterminé après le début de la délivrance dudit second courant de pilotage (i2).

6. Appareil selon la revendication 5, dans lequel ledit circuit de temporisation comprend un détecteur de front (26) et un générateur d'impulsions (27).

FIG. 1

FIG. 2

FIG. 3A

FIG. 3B

EP 0 271 342 B1

# FIG. 4

# FIG. 5

## FIG. 6

## FIG. 7A

(t1)

## FIG. 7B

## FIG. 7C

(t2)

## FIG. 7D

## FIG. 7E

(t3)

EP 0 271 342 B1

F I G. 8

## *FIG. 9*

## *FIG. 10*